# EUROPÄISCHE PATENTANMELDUNG

(11) **EP 0 772 336 A2**
(43) Veröffentlichungstag der Anmeldung: **07.05.1997**
(21) Anmeldenummer: 96120053.2
(22) Anmeldetag: 13.12.1996
(51) Int. Cl.: H04M 9/00, H04M 1/00, H04Q 7/00

(54) **Telefongerät**

(71) Anmelder: Straeuli, Alfred, 8703 Erlenbach (CH); Mathis, Marco, 8706 Meilen (CH)
(72) Erfinder: Straeuli, Alfred, 8703 Erlenbach (CH); Mathis, Marco, 8706 Meilen (CH)
(74) Vertreter: Troesch Scheidegger Werner AG

(57) **Zusammenfassung**

Es wird ein Telefongerät vorgeschlagen, bei welchem anstelle der üblichen Linienwahleinheit lediglich eine Linienwahlauslöseeinheit (9) vorgesehen ist, bei deren manueller Auslösung (11) entweder eine darin fix programmierte Linienwahlnummer aktiviert wird oder ein Telefongerät-identifizierender Code an eine Zentrale übermittelt wird, welch letztere dann die Verbindung mit einer vorabgesprochenen Empfängerstation vermittelt.

## Beschreibung

Die vorliegende Erfindung betrifft ein Telefongerät der im Oberbegriff von Anspruch 1 spezifizierten Art.

Bekannte Telefongeräte dieser Art weisen eine Linienwahleinheit auf, welche ermöglicht, durch Tastaturbedienung sämtliche zur Verfügung stehenden Linien anzuwählen.

Bei gewissen Organisationsformen, bei denen beispielsweise periphere Geräteinheiten ausschliesslich mit einer Zentrale kommunizieren sollten, sind die herkömmlichen Telefongeräte der genannten Art ungeeignet, einerseits, weil sie die freie Linienwahl ermöglichen und damit ein in der angesprochenen Organisationsstruktur nicht erwünschtes Telefonieren. Dies zu kontrollieren, bedeutet einen wesentlichen Aufwand. Anderseits sind sie gerade wegen der freien Linienwahl für solche Zwecke wesentlich zu aufwendig, und in manchen Fällen ist die Linienwahl selber zu kompliziert.

Ein typisches Beispiel einer Organisationsstruktur der obgenannten Art, bei welcher Bedienungseinfachheit an Peripheriegerät von ausschlaggebender Bedeutung ist, ist diejenige, bei der eine Mutter jederzeit mit ihren Kindern kommunizieren können möchte, sei dies in der Schule oder auf dem Spielplatz. Eine andere derartige Organisationsstruktur kann bei Aussendienststellen bezüglich einer Zentrale bestehen etc.

Es ist Aufgabe der vorliegenden Erfindung, ein Telefongerät obgenannter Art vorzuschlagen, welches höchst kostengünstig herstellbar, den erwähnten Bedürfnissen Rechnung trägt. Dies wird beim Telefongerät genannter Art durch dessen Ausbildung nach dem Kennzeichen von Anspruch 1 erreicht.

Die Erfindung wird anschliessend beispielsweise anhand von Figuren erläutert. Es zeigen:
- Fig. 1: Ein Signalfluss/Funktionsblockdiagramm eines erfindungsgemässen Telefongerätes;
- Fig. 2: ein Signalfluss/Funktionsblockdiagramm eines erfindungsgemässen Telefongerätes in bevorzugter Ausführungsform;
- Fig. 3: beispielsweise die Realisation des erfindungsgemässen Telefongerätes als Clip für Kinder;
- Fig. 4: schematisch eine mit dem erfindungsgemässen Telefongerät gemäss Fig. 1 realisierte, einfache Kommunikationsstruktur;
- Fig. 5: schematisch eine mit dem erfindungsgemässen Telefongerät gemäss Fig. 2 realisierte, einfache Kommunikationsstruktur.

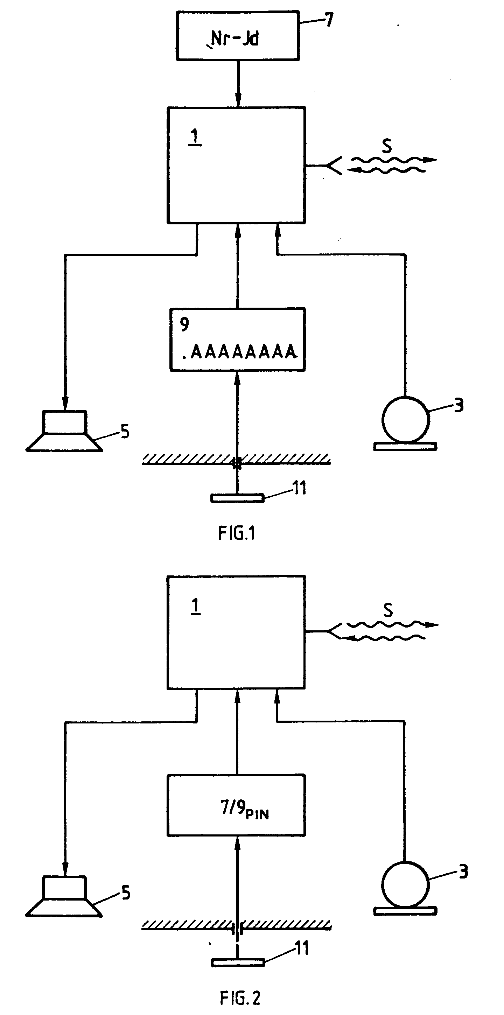

Das erfindungsgemässe Telefongerät ist ein sogenanntes Funktelefongerät und arbeitet auf dem jeweiligen örtlichen Funktelefonnetz, wie über das Natel-Netz, das GMS-Netz, das USA- oder das japanische Netz. Es weist hierzu, wie bei solchen Telefongeräten üblich, eine Funkeinheit 1 auf, mit Sende- und Empfangseinheiten für das Funksignal S. Im weiteren ist ein akustisch/elektrischer Wandler, vorzugsweise in Form eines Mikrophons 3, vorgesehen, sowie ein elektrisch/akustischer Wandler, vorzugsweise in Form eines Lautsprechers 5. Wie schematisch in Fig. 1 dargestellt, sind, entsprechend, Mikrophon 3 mit einem Eingang, Lautsprecher 5 mit einem Ausgang der Funkeinheit 1 verbunden. Im weiteren ist mit der Funkeinheit 1 eine Speichereinheit 7 wirkverbunden, welche die Geräteidentifikationsnummer beinhaltet und so das Gerät für ankommende Anrufe identifiziert.

Telefongeräte dieser Art weisen im weiteren eine Linienwahl-Identifikationseinheit auf, bei welcher, üblicherweise tastenfeldgesteuert, die erwünschte Linie für ausgehende Gespräche gewählt werden kann. Erfindungsgemäss besteht beim erfindungsgemässen Gerät die Linienwahl-Identifikationseinheit aus einem Nur-Lese-Speicher 9, einem ROM, womit vorzugsweise nur eine einzige Linienwahlnummer identifiziert wird.

Die Speichereinheit 7 kann dabei direkt die vom Netzbetreiber dem Gerät zugeordnete Anwahlnummer als Geräte-Identifikationsnummer beinhalten.

Auch der Nur-Lesespeicher 9 kann direkt die Linienwahlnummer der gewollten Empfangsstation beinhalten.

Bei einer bevorzugten Ausführungsform gemäss Fig. 2 beinhaltet aber die Speichereinheit 7 einen fix dem Gerät zugeordneten Code, einen PIN-Code.

Auch der Nur-Lesespeicher 9 beinhaltet vorzugsweise einen fix zugeordneten Code, vorzugsweise denselben PIN-Code. Damit kann, wie in Fig. 2 dargestellt, nurmehr eine Speichereinheit 7/9 für den angesprochenen PIN-Code vorgesehen sein.

Bei der ersten Ausführungsform gemäss Fig. 1 kann der Linienwahlspeicher 9 bevorzugterweise, wie durch eine Servicestelle, modular entfernt werden und zur Änderung der Linienwahlnummer einer vorgegebenen Empfangsstation ein anderes Speichermodul eingesetzt werden. Durch Tastaturbetätigung, vorzugsweise und wie schematisch in Fig. 1 dargestellt, lediglich einer einzigen Taste 11 am Gerät wird die abgespeicherte Nummer AAA ... der Empfangsstation von Speichereinheit 9 zur Linienanwahl an die Funkeinheit 1 übermittelt. Die Speichereinheit 7 wird mit der das Geräte identifizierenden Anrufnummer geladen.

Bei der bevorzugten Ausführungsform gemäss Fig. 2 wird hingegen die Kommunikation wie folgt aufgebaut:

Eine Zentrale registriert, dem Geräte-Code (PIN-Code) zugeordnet, die Linienwahlnummer des dem erfindungsgemässen Gerät zugeordneten Empfängers.

Auf Tastendruck am erfindungsgemässen Gerät hin wird von letzterem ein dem PIN-Code entsprechendes Signal an die Zentrale gesendet. Daraus identifiziert die Zentrale das anrufende Gerät und erstellt über ganz normale Linienwahl die Verbindung zwischen dem identifizierten Gerät und dem mit diesem Gerät mitidentifizierten, beabsichtigten einen Empfängeranschluss.

Umgekehrt erstellt die Zentrale bei eingehenden Anrufen für das erfindungsgemässe Gerät insbesondere ab der vorerwähnten ausgewählten Empfängerstation die Verbindung zum Gerät mittels eines dem PIN-Code entsprechenden Aufrufsignals.

Bei der letzterwähnten, bevorzugten Realisationsform gemäss Fig. 2 kann der geräteidentifizierende Code fix dem Gerät zugeordnet sein, die erwünschte Empfangsstation wird bei der Zentrale für den spezifischen Gerätecode bestellt.

Ein solch höchst einfaches Telefongerät, welches nur zulässt, eine einzige Linie anzuwählen, eignet sich ausserordentlich gut zur Kinderbedienung oder für die Bedienung weiterer Personenkreise, bei denen eine fehlersichere, rasche Bedienung wie zu Alarmzwecken gefordert ist. Solche Personenkreise können in Wachtorganisationen, bei sportlichen Tätigkeiten wie beim Bergsteigen, Segeln, Tauchen unschätzbare Dienste leisten.

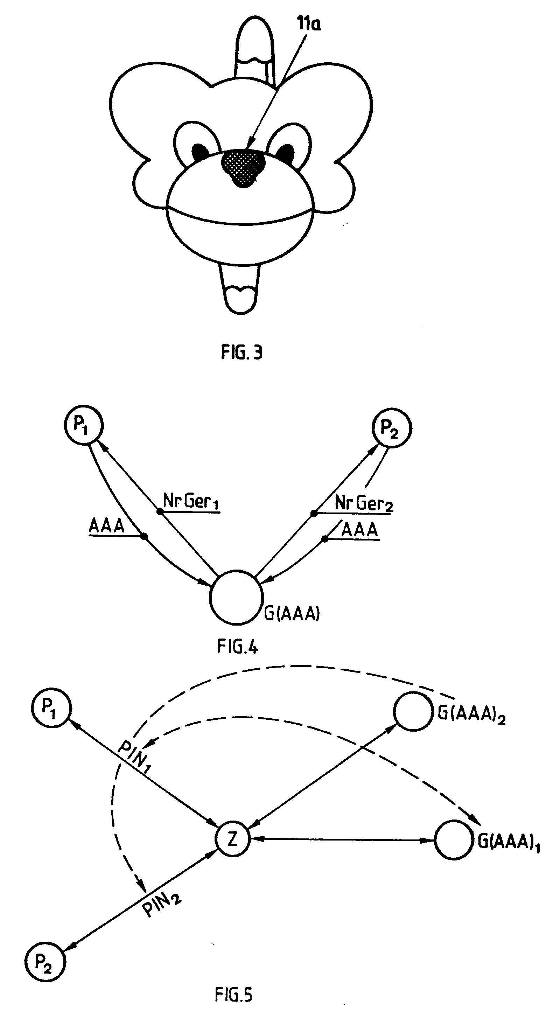

In Fig. 3 ist beispielsweise für Kinder das erfindungsgemässe Gerät in einen Steckclip integriert und die einzige zu bedienende Tase 11a an markanter, einprägsamer Stelle vorgesehen. Ein solches Gerät eignet sich auch ausgezeichnet als Werbeträger.

In Fig. 4 ist schematisch die Kommunikationsstruktur dargestellt, bei welcher zwei erfindungsgemässe Peripheriegeräte P_{1,2} beispielsweise der beiden Kinder, je durch die gewollte Gegenstation G, beispielsweise bei der Mutter, mit der jeweiligen am erfindungsgemässen Gerät abgespeicherten Geräteidentifikationsnummer entsprechend 7 von Fig. 1 aufgerufen werden können. Darnach kann die Gegenstation G, wie beispielsweise die Mutter, mit dem jeweiligen Kind sprechen. Ergibt sich eine Situation, in welcher beispielsweise das Kind mit der Mutter kommunizieren will, so braucht es lediglich die Linienwahltaste 11 bzw. 11a zu betätigen, worauf gemäss Fig. 1 die fix einprogrammierte Nummer der Gegenstation, in Fig. 4 wiederum mit AAA bezeichnet, angewählt wird und darnach die Kommunikationsverbindung mit der Gegenstation Z erstellt ist. Wie ersichtlich, wird bei der Gegenstation G ein ganz normales Telefongerät eingesetzt mit Freiwahlmöglichkeit, während an der Peripherie erfindungsgemässe Geräte eingesetzt werden, welche lediglich die Nummer der Gegenstation G anwählen können, und dies durch eine einfache Auslöse-Bedienung.

Gemäss Fig. 5 wird am bevorzugten Gerät gemäss Fig. 2 die Kommunation erst über ein dem PIN-Code entsprechendes Signal mit einer Zentrale Z erstellt, die, dem PIN-Code entsprechend, die Verbindung mit der abgesprochenen Gegenstation G erstellt. Umgekehrt vermittelt die Zentrale Z bei Identifikation des PIN-Codes von einer anrufenden Gegenstation G die Kommunikation mit dem mittels PIN-Code identifizierten erfindungsgemässen Gerät. Wie gestrichelt dargestellt, werden den einzelnen PIN-Codes an der Zentrale Z die abgesprochenen Gegenstation G zugeordnet. Selbstverständlich können dabei für an ein erfindungsgemässes Gerät gerichtete Gespräche mehrere Gegenstationen G berechtigt sein, während bevorzugterweise von einem erfindungsgemässen Gerät bzw. PIN-Code nur eine Gegenstation als Empfängerstation identifiziert wird.

Mit dem erfindungsgemässen Gerät wird somit ein Kommunikationsgerät für den mobilen Gebrauch vorgeschlagen, das ortsunabhängig eingesetzt werden kann wie ein Funktelefon, jedoch keine integrierte Wähleinheit umfasst.

Das vorgeschlagene Kommunikationsgerät ist äusserst klein und kann in verschiedenen Dekors in Verbindung mit oder ohne Werbeträger und in unterschiedlichen Formen für den professionellen Bereich wie auch für den Privatbereich, z.B. als Kommuniktionsverbindung zwischen Mutter und Kind eingesetzt werden. Die Verbindungen werden ab dem erfindungsgemässen Gerät ohne Kenntnis von Zahlen oder Buchstaben erstellt, nur mittels Knopfdruck. Das erfindungsgemässe Gerät verhindert weiter, dass unerwünschte Telefonverbindungen aufgebaut werden können. Bei Verlust oder beim Abhandenkommen des Gerätes ist es für eine Drittperson wertlos und kann nicht für deren eigene Zwecke verwendet werden.

Wie beschrieben wurde, stellt das erfindungsgemässe Gerät ohne Wähleinheit mittels Knopfdruck eine analoge oder digitale Verbindung über ein bestehendes oder zu erstellendes Funknetz her, direkt oder über eine Zentrale vermittelt. Insbesondere ermöglicht das Einbeziehen von bereits weltweit existierenden Funknetzen mit den vorhandenen Infrastrukturen eine kostengünstige Betriebsstruktur.

Wie erwähnt wurde, eignet sich ein solch höchst einfaches Telefongerät, welches in bevorzugter Ausführungsform nur zulässt, eine einzige Linie anzuwählen, ausserordentlich gut für Kinderbedienung, die Bedienung durch behinderte, alte oder kranke Personen oder für die Bedienung durch weitere Personenkreise, bei denen dies fehlersicher, rasch, wie zur Alarmauslösung, möglich sein soll.

## Patentansprüche

1. Telefongerät umfassend
- eine auf die Frequenz des örtlichen Funktelefondienstes abgestimmte Sende/Empfängereinheit (1)
damit wirkverbunden:
- ein elektro/akustischer Wandler (5)
- ein akustisch/elektrischer Wandler (3)
- eine Linienwahl-Auslöseeinheit (9)
- eine Gerätenummer-Speichereinheit (7)
dadurch gekennzeichnet, dass die Linienwahl-Auslöseeinheit (9) durch eine Nur-Lese-Speichereinheit gebildet ist, deren Auslesen für die Initialisierung der Linienwahl durch eine manuelle betätigbare Tastenanordnung (11) ausgelöst wird.

2. Telefongerät nach Anspruch 1, dadurch gekennzeichnet, dass die Nur-Lese-Speichereinheit (9) zur Abspeicherung einer Linienwahlnummer (AAA...) ausgelegt ist oder zur Abspeicherung eines die Linienwahlnummer identifizierenden Codes.

3. Telefongerät nach einem der Ansprüche 1 oder 2, dadurch gekennzeichnet, dass die Nur-Lese-Speichereinheit eine modular auswechselbare oder nicht auswechselbare, fest dem Gerät zugeordnete Speichereinheit umfasst.

4. Telefongerät nach einem der Ansprüche 1 bis 3, dadurch gekennzeichnet, dass es als Clip ausgebildet ist.

5. Verwendung des Telefongerätes nach einem der Ansprüche 1 bis 4 als Werbeträger.
